# EUROPÄISCHE PATENTANMELDUNG

(11) **EP 1 094 659 A2**
(43) Veröffentlichungstag der Anmeldung: **25.04.2001**
(21) Anmeldenummer: 00440248.3
(22) Anmeldetag: 22.09.2000
(51) Int. Cl.: H04M 15/00

(54) **Verfahren zur Signalisierung von Kosteninformation bei Verbindungsaufbau sowie Tarifserver dafür**

(30) Priorität: 02.10.1999 DE 19947535
(71) Anmelder: ALCATEL, 75008 Paris (FR)
(72) Erfinder: Kaiser, Bernhard, Dr., 71665 Vaihingen/Enz (DE)
(74) Vertreter: Rausch, Gabriele, Dr.

(57) **Zusammenfassung**

Die Erfindung ist ein Verfahren zur Signalisierung von Kosteninformation in einem Telekommunikationsnetz mit den Schritten: das Datenendgerät (1) des Teilnehmers stellt eine Verbindung zu einer Vermittlungsstelle (2) her,die Vermittlungsstelle weist eine Call Handling Funktion (6) auf, die eine Tarifanfrage (10) an einen Tarifserver(4) stellt, der Tarifserver teilt eine Tarifantwort (11) für die angeforderte Verbindung an die Call Handling Funktion (6) der Vermittlungsstelle (2) mit, die Call Handling Funktion (6) gibt die Tarifantwort (11) an eine CDR-Generierungsfunktion (7)in der Vermittlungsstelle weiter, die CDR-Generierungsfunktion (7) gibt Kosteninformation an die Kostenübermittlungsfunktion (8) der Vermittlungsstelle (2) weiter, die Kostenübermittlungsfunktion (8) übermittelt an das Datenendgerät des Teilnehmers die Kosteninformation.

## Beschreibung

Die Erfindung geht aus von einem Verfahren zur Signalisierung von Kosteninformationen bei Verbindungsaufbau in einem Telekommunikationsnetz sowie einen Tarifserver dafür nach den Oberbegriffen der unabhängigen Ansprüche.

Bekannt ist das sogenannte Call Handling in der Vermittlungsstelle. Das Call Handling-Verfahren ist sehr beschränkt, da es nicht die individuellen Teilnehmer berücksichtigt, sondern nur global nach Kriterien der Zeit, des Kalenders, der Entfernung und des genutzten Dienstes die Tarif-Rate ermittelt. Dieses Verfahren erlaubt jedoch die Anzeige der Kosten während der Telefon-Verbindung auf einem Gebührenzähler.

Dem herkömmlichen Nachrichtennetz für leitungsvermittelte Verbindungen ist ein sogenanntes Intelligentes Netz (IN) überlagert, mit dessen Hilfe über den reinen Verbindungsaufbau hinaus, eine Vielzahl anderer Dienste erbracht werden kann. Um sich eines bestimmten Dienstes dieses Intelligenten Netzes zu bedienen, muß man zunächst eine Dienstekennung wählen. Die Dienstekennung ist notwendig um einen sogenannten Service Switching Point (SSP) zu erreichen, der als sogenannte Service Switching Function (SSF) den gewünschten Dienst anhand der Dienstekennung vermittelt. Hierzu wertet der SSP die übertragenen Dienstekennung aus und wendet sich dann über einen sogenannten Service Transfer Point (STP) an einen Dienstesteuerungsrechner den sogenannten Service Control Point (SCP), der dann die Erbringung des angeforderten Dienstes steuert. Der SSP ist die Schnittstelle zwischen dem herkömmlichen Nachrichtennetz und dem Intelligenten Netz. STP und SCP sind Bestandteile des Intelligenten Netzes. Eine allgemeine Beschreibung des Intelligenten Netzes läßt sich aus dem Buch "Intelligente Netze", G. Siegmund, 1999, Seite 31ff entnehmen.

Dem herkömmlichen Nachrichtennetz angegliedert oder überlagert ist auch ein Signalisierungsnetz, das heute üblicherweise mit dem Zeichenvergabe-Verfahren Nr. 7 der ITU-T arbeitet. Dieses Zeichenvergabe-Verfahren und das zugehörige Signalisierungsnetz sind allgemein unter der Abkürzung # 7 bekannt. Dieses Zeichenvergabe-Verfahren wird auch im Intelligenten Netz verwendet. Der oben genannte Service Transfer Point (STP) des Intelligenten Netzes ist dabei identisch mit dem gleich abgekürzten Signalling Transfer Point (STP) des Signalisierungsnetzes #7. Ein Vorteil der möglichen Dienste im Intelligenten Netz ist die Erstellung von individuellen Abrechnungen bezüglich der Kosten der Verbindungen. Am Ende einer IN-Verbindung wird ein Anrufprotokoll vom SSP und STP erstellt, in dem alle wichtigen Daten für diesen Anruf enthalten sind. Diese Protokolle werden an den Service Management Point (SMP) übermittelt, der heraus neben der Statistikfunktion die Informationen für die Belastung ermittelt. In SMP können die protokollierten Ergebnisse des Anrufes bzw. des Dienstes mit der Tariffierung durch den Anbieter des Dienstes verknüpft um heraus ein Ticket für die Rechnungsstellung erzeugt werden.

Die Struktur der spezifischen Tariffierung für unterschiedliche Telefondienste sind Schlüsselpunkte für die Betreiber des Netzes. Die Kostenstrukturen für Verbindungen sind fundamentale Mittel zur Unterscheidung und Differenzierung der verschiedenen Dienstleister. Die augenblicklich vorhandenen Verfahren zur Ermittlung und Darstellung der Kosten sind nicht befriedigend. Sie können dem jeweiligen Kunden Informationen erst nach Beendigung einer Verbindung geben.

Daher ist es Aufgabe der vorliegenden Erfindung ein Verfahren vorzuschlagen, dass es ermöglicht dem Teilnehmer in Telekommunikationsnetz vorab und während einer Verbindung Informationen über Kosten zu übermitteln.

Diese Aufgabe wird erfindungsgemäß gelöst durch ein Verfahren zur Signalisierung von Kosteninformation bei Verbindung in einem Telekommunikationsnetz nach der Lehre des Anspruch 1 sowie durch einen Tarifserver nach Anspruch 5. Das erfindungsgemäße Verfahren sowie der erfindungsgemäße Tarifserver weist den besonderen Vorteil auf, dass die Kosteninformation dem Teilnehmer direkt vorab und während einer Verbindung zur Verfügung gestellt wird.

Weitere vorteilhafte Ausgestaltungen der Erfindung sind in den Unteransprüchen und in der Beschreibung detailliert offenbart.

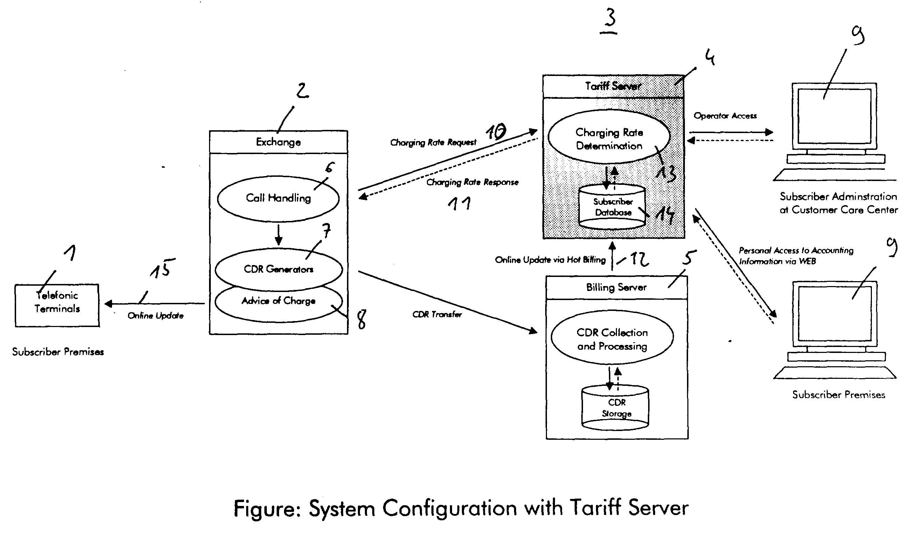

Die einzige Figur zeigt, den Aufbau eines erfindungsgemäßen Netzes. In Figur 1 ist ein Datenendgerät 1 dargestellt, dass mit einer Vermittlungsstelle 2 in Verbindung tritt. Die Vermittlungsstelle 2 enthält Funktionen des SSP und des SCP. Die Vermittlungsstelle 2 weist eine Call Handling Funktion 6 sowie einen CDR(Call Detail Records)-Generierungsfunktion 7, sowie eine Kostenübermittlungsfunktion 8 auf. Die Vermittlungsstelle 2 steht mit einem SMP Service Management Point 3 in Verbindung. Innerhalb des Service Management Point 3 befindet sich ein Tarifserver 4 sowie ein Rechnungsserver 5. Der Service Management Point (SMP) ist weiterhin mit externen Zugangseinheiten 9 verbunden.

Bei Verbindungsaufbau des Datenendgeräts 1 des Teilnehmers mit der Vermittlungsstelle 2 übernimmt die Call Handling Funktion 6 die angefragten Verbindungsdaten. Die Call Handling Funktion fragt beim Tarifserver 4 mit einer Tarifanfrage 10 nach dem Tarif für die gewünschte Verbindung. Im Tarifserver fragt die Charging Rate Determination Funktion 13 die gewünschte Tarifinformation in einer Datenbank 14 ab. In dieser Datenbank sind Informationen zum Teilnehmer und seine spezifischen Tarifbedingungen abgelegt. Über die Charging Rate Determination Funktion 13 des Tarifservers 4)beantwortet der Tarifserver mit einer Tarifantwort 11 die Anfrage der Call Handling Funktion 6. Die Call Handling Funktion 6 gibt die Tarifantwort 11 an den CDR-Generator 7 und die Kostenübermittungsfunktion 8 der Vermittlungsstelle 2 weiter. Diese Kostenübermittungsfunktion 8 übermittelt über einen Signalisierungskanal 15 die Information direkt an das Datenendgerät 1 des Teilnehmers. Auf diese Weise wird noch vor Verbindungsaufbau der Tarif der gewünschten Verbindung an den Teilnehmer übermittelt. Auch während einer bestehenden Verbindung wird die Information aktualisiert. Der CDR-Generator 7 ermittelt die Einheiten, die in der aktuellen Verbindung bereits verbraucht sind. Der CDR-Generator 7 steht weiterhin mit einem Rechnungsserver 5 in Verbindung. In diesem Rechnungsserver 5 werden die CDR-Einheiten gesammelt, auf der Basis des aktuellen Tarifs verarbeitet und eventuell zwischengespeichert. Die Informationen über die angelaufenen Einheiten werden über einen sogenannten "Hot Billing Kanal" 12 an den Tarifserver 4 weitergegeben. Diese Information stellt sicher, dass die aktuellen Kosten in der Datenbank für den Teilnehmer zur Verfügung steht. Die aktuellen Kosten werden dann über den Weg der Tarifanfrage und Tarifantwort an die Vermittlungsstellen und zum Teilnehmer weitergegeben.

Der Tarifserver 4 weist weiterhin verschieden Zugangsmöglichkeiten 9 auf. Über ein Service Center 9 kann der Diensteanbieter auf den Tarifserver 4 zugreifen und die aktuellen Teilnehmer sowie deren aktuelle Tarife anpassen. Weiterhin steht für den Teilnehmer im Telekommunikationsnetz eine Zugangsmöglichkeit für eine persönliche Abfrage der eigenen aktuellen Tarife zur Verfügung. Diese aktuelle Abfrage kann dabei über das Datenendgerät oder unter Zwischenschaltung des Internet mit einem PC erfolgen.

## Patentansprüche

1. Verfahren zur Signalisierung von Kosteninformation in einem Telekommunikationsnetz mit den Schritten:
- das Datenendgerät (1) des Teilnehmers stellt eine Verbindung zu einer Vermittlungsstelle (2) her,
- die Vermittlungsstelle weist eine Call Handling Funktion (6) auf, die eine Tarifanfrage (10) an einen Tarifserver(4) stellt
- der Tarifserver teilt eine Tarifantwort (11) für die angeforderte Verbindung an die Call Handling Funktion (6) der Vermittlungsstelle (2) mit
- die Call Handling Funktion (6) gibt die Tarifantwort (11) an eine CDR-Generierungsfunktion (7)in der Vermittlungsstelle weiter
- die CDR-Generierungsfunktion (7) gibt Kosteninformation an die Kostenübermittlungsfunktion (8) der Vermittlungsstelle (2) weiter
- die Kostenübermittlungsfunktion (8) übermittelt an das Datenendgerät des Teilnehmers die Kosteninformation.

2. Verfahren zur Signalisierung von Kosteninformation nach Anspruch 1, dadurch gekennzeichnet, daß die der Tarifserver Zugriff auf einen Teilnehmerdatenbank mit aktuellen Tarifdaten hat.

3. Verfahren zur Signalisierung von Kosteninformation nach Anspruch 1, dadurch gekennzeichnet, daß die aktuellen Kosten beim Verbindungsaufbau und/oder während der bestehenden Verbindung aktualisiert werden.

4. Verfahren zur Signalisierung von Kosteninformation nach Anspruch 1, dadurch gekennzeichnet, daß die Informationen des Tarifservers (4) mithilfe eines Rechnungsservers (5) aktualisiert werden.

5. Tarifserver (4) mit Verbindungen zur Vermittlungsstelle (2)
- zu einem Rechnungsserver (5)
- zu einem Service Operator (9)
- zu einem Datenendgerät (9) von Teilnehmern
- wobei der Tarifserver (4) einen Charging Rate Funktion(13) aufweist, die mit einer Teilnehmer-Datenbank (14) in Verbindung steht.

6. Tarifserver (6) nach Anspruch 5, dadurch gekennzeichnet, dass die Teilnehmer-Datenbank (14) durch aktuelle Daten des Rechnungsservers (6) zur aktuellen Kostensituation angepasst wird.
